# EUROPÄISCHE PATENTSCHRIFT

(11) **EP 1 577 130 B1**
(45) Veröffentlichungstag und Bekanntmachung des Hinweises auf die Patenterteilung: **28.06.2006**
(21) Anmeldenummer: 05003564.1
(22) Anmeldetag: 18.02.2005
(51) Int. Cl.: B60H 1/00, B60H 1/22

(54) **Sicherheitseinrichtung für eine Standheizung**
Security arrangement for an auxiliary heating device
Dispositif de sécurité pour équipement de chauffage auxilliaire

(30) Priorität: 19.03.2004 DE 102004013610
(43) Veröffentlichungstag der Anmeldung: 21.09.2005
(73) Patentinhaber: GM Global Technology Operations, Inc., Detroit, MI 48265-3000 (US)
(72) Erfinder: Berenz, Thomas, 65428 Rüsselheim (DE)
(74) Vertreter: Daniel, Ulrich W.P.

(56) Entgegenhaltungen:
- DE-A1- 10 240 328
- DE-C1- 19 843 516
- GB-A- 2 397 679

## Beschreibung

Die Erfindung betrifft ein Verfahren zum Betreiben einer Sicherheitseinrichtung für eine Standheizung insbesondere in einem oder für ein Kraftfahrzeug. Die Erfindung betrifft ferner eine solche Sicherheitseinrichtung.

Moderne Kraftfahrzeuge weisen neben der standardmäßig eingebauten Heizung zunehmend auch eine Standheizung auf. Standheizungen sind zum Beispiel in der DE 102 40 328 A1 und der DE 197 56 628 beschrieben. Details zu Steuerungen von Standheizungen ergeben sich auch aus DE 101 25 591 C1 und aus EP 0 346 135 A2.

Beim Betreiben einer Heizung in einem Kraftfahrzeug und insbesondere beim Betreiben einer Standheizung sind besondere Sicherheitsvorkehrungen zu treffen, um sicherzustellen, dass der leicht entflammbare Kraftstoff nicht unerwünschterweise durch einen Funken aus dem Heizsystem bzw. Standheizsystem entflammt wird. Aus diesen Gründen ist bei der Konstruktion eines Kraftfahrzeuges vor allem darauf zu achten, dass der Kraftstofffluss und das Heizsystem voneinander separiert sind. Darüber hinaus gibt es entsprechende Explosionsschutzvorgaben, die ein unerwünschtes Entzünden des Kraftstoffes außerhalb der Brennkraftmaschine des Kraftfahrzeuges verhindern sollen. Weitere Vorschriften betreffen den Betrieb des Kraftfahrzeugs, die vorsehen, dass solche Heizvorrichtungen, die über eine Standheizfunktion ververfügen bzw. eine separierte Standheizung aufweisen, in geschlossenen Räumen und an explosionsgefährdenden Orten aus Sicherheitsgründen nicht betrieben werden dürfen.

Eine besondere Gefahrensituation liegt vor allem dann vor, wenn das Kraftfahrzeug betankt wird und gleichzeitig die Standheizung betrieben wird. Aufgrund der explosiven Dämpfe des Kraftstoffes in der unmittelbaren Umgebung einer Zapfsäule bzw. aufgrund von gegebenenfalls am Boden einer Tankstelle vorhandenen Kraftstoffresten ergibt sich eine erhöhte Explosionsgefahr. In diesem Zusammenhang wurde eine neue Richtlinie des europäischen Parlamentes und des europäischen Rates vom 27. September 2001 über den Betrieb von Heizanlagen für Kraftfahrzeuge erlassen. Grundgedanke der Richtlinie mit dem Aktenzeichen 2001/56/EG ist es, beim Tankvorgang die Betätigung der Standheizung aus Sicherheitsgründen zu verhindern. Im Anhang VII unter Punkt 2.3.3 dieser Richtlinie ist daher festgelegt, dass am Einfüllstutzen des Tankes ein Hinweis anzubringen ist, dass das Heizgerät vor dem Nachfüllen von Brennstoff abgeschaltet werden muss. Eine entsprechende Anweisung ist auch in die Bedienungsanleitung des Kraftfahrzeugs mit aufzunehmen. Mit einem solchen, im Bereich des Tankeinfüllstutzens bzw. Tankdeckels angeklebten Warnhinweis soll eine höhere Sicherheit beim Betreiben einer Standheizung und gleichzeitigem Betanken des Kraftfahrzeuges realisiert werden.

Problematisch daran ist, dass ein solcher Warnhinweis vom Kraftfahrzeugnutzer sehr häufig unbeachtet bleibt, so dass in diesem Fall die oben beschriebene Gefahrensituation nach wie vor existiert

Die gattungsgemäße DE 102 40 328 offenbart ein Verfahren zum Betreiben einer Sicherheitseinrichtung für eine Standheizung, wobei die Standheizung beim Öffnen der Tankklappe automatisch augeschaltet wird.

Vor diesem Hintergrund liegt der vorliegenden Erfindung nun die Aufgabe zugrunde, eine Einrichtung bereitzustellen, die einen besseren, insbesondere verlässlicheren und sicheren Betrieb einer Standheizung ermöglicht.

Erfindungsgemäß wird diese Aufgabe durch ein Verfahren mit den Merkmalen des Patentanspruchs 1 sowie durch eine Sicherheitseinrichtung mit den Merkmalen des Patentanspruchs 6 gelöst. Demgemäß ist vorgesehen:

Ein Verfahren zum Betreiben einer Sicherheitseinrichtung für eine Standheizung in einem oder für ein Kraftfahrzeug, bei dem die Zündung des Kraftfahrzeuges zunächst eingeschaltet ist und bei dem sich die Standheizung zunächst im eingeschalteten Betriebszustand befindet, bei dem die Standheizung automatisch in einen ausgeschalteten Zustand geschaltet wird, sofern die Zündung des Kraftfahrzeuges ausgeschalten wird und/oder zumindest eine Tür des Kraftfahrzeuges geöffnet wird. (Patentanspruch 1)

Eine Sicherheitseinrichtung zum Betreiben einer Standheizung in einem oder für ein Kraftfahrzeug, insbesondere mittels eines erfindungsgemäßen Verfahrens, mit einer mit der Standheizung und ein Zündsystem des Kraftfahrzeuges gekoppelten Steuereinrichtung zur Steuerung des Betriebs der Standheizung derart, dass im Falle eines Ausschaltens der Zündung des Zündsystems und/oder ein Öffnen zumindest einer Tür des Kraftfahrzeuges ein Ausschalten der Standheizung erfolgt. (Patentanspruch 6)

Die der vorliegenden Erfindung zugrunde liegende Idee besteht darin, zur Erhöhung der Sicherheit die Standheizung immer dann auszuschalten, wenn die Zündung für die Brennkraftmaschine des Kraftfahrzeuges ausgeschalten wird. Durch das Ausschalten der Zündung wird gewissermaßen signalisiert, dass der Kraftfahrzeugnutzer seine Fahrt beendet hat bzw. unterbricht, beispielsweise zum Zwecke des Auftankens des Kraftfahrzeuges. In eben solchen Fällen ist eine erhöhte Gefahr beim gleichzeitigen Betreiben der Standheizung und Auftanken des Kraftfahrzeuges gegeben. Indem in diesen Fällen die Standheizung grundsätzlich ausgeschaltet wird, wird die Explosionsgefahr bedingt durch die laufende Standheizung und der die Standheizung umgebenden explosionsgefährdeten Dämpfe im Bereich der Tankstelle signifikant verringert.

Als zusätzliche oder alternative Ausschaltbedingung der Standheizung kann auch das Öffnen zumindest einer Fahrzeugtür herangezogen werden. Gegenüber der oben genannten Ausschaltbedingung für die Standheizung, nämlich das Ausschalten der Zündung, hat diese zusätzliche Ausschaltbedingung folgenden Vorteil: Es kommt häufig vor, das die Zündung ausgeschalten wird, beispielsweise in einem Stau, vor einem Bahnübergang oder vor einer roten Ampel, ohne dass allerdings ein Unterbrechen der Fahrt vorgesehen ist. Durch die zusätzliche Ausschaltbedingung für die Standheizung, nämlich das Öffnen zumindest einer Tür, können die genannten Fälle, bei denen also die Standheizung nicht ausgeschalten werden soll, von den Fällen, bei denen der Kraftfahrzeugnutzer die Fahrt zum Beispiel zum Auftanken unterbricht, unterschieden werden.

Durch das erfindungsgemäße Verfahren bzw. durch die erfindungsgemäße Sicherheitseinrichtung wird eine Gefahrensituation, insbesondere eine Explosionsgefahr, automatisch verhindert bzw. auf ein Mindestmaß reduziert, da ein Betanken bei laufender Standheizung quasi unmöglich ist. Darüber hinaus müssen keinerlei Warnhinweise im Kraftfahrzeug angebracht werden bzw. es muss auch kein eigens zu diesem Zwecke in der Betriebsanleitung vorgesehener Hinweis angegeben werden.

Durch die erfindungsgemäße, zwanghaft vorgegebene und erforderliche Betätigungswechselwirkung zwischen dem Betreiben der Standheizung und dem Öffnen der Tür bzw. dem Ausschalten der Zündung wird mit hoher Sicherheit verhindert, dass ein Auftanken bei gleichzeitig laufender Standheizung erfolgt. Auf diese Weise ist ein extrem hoher Sicherheitsstandard erfüllt und eine ungewollte Betätigung oder Inbetriebnahme der Standheizung im Falle des Betankens des Kraftfahrzeuges ausgeschlossen. Auf diese Weise erhöht sich die Sicherheit, insbesondere die Explosionssicherheit derart, da es nun kaum zu einem versehentlichen, sicherheitsbedenklichen Betrieb der Standheizung kommen kann.

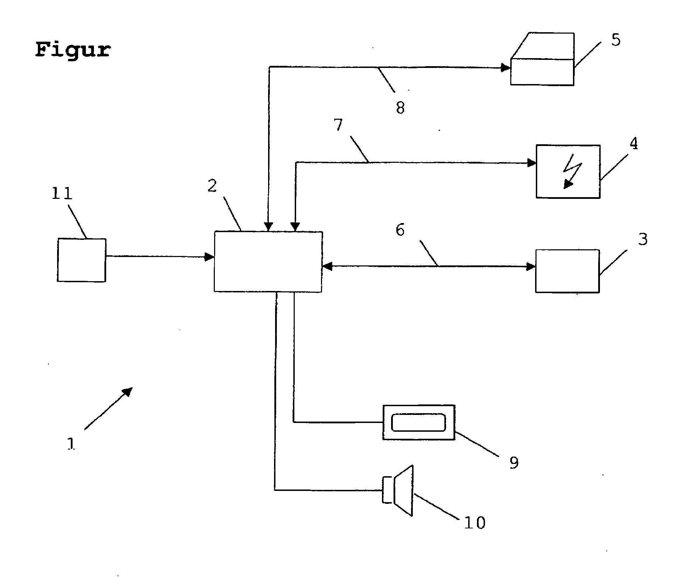

Vorteilhafte Ausgestaltungen und Weiterbildungen der Erfindung ergeben sich aus den weiteren Unteransprüchen sowie der Beschreibung unter Bezugnahme auf die Zeichnung.

In einer sehr vorteilhaften Ausgestaltung wird die Standheizung nach einem automatischen Ausschalten wieder automatisch in Betrieb genommen, sobald die Zündung wieder eingeschalten wird und damit die Brennkraftmaschine in Betrieb genommen wird. Zusätzlich oder alternativ kann auch vorgesehen sein, dass die Standheizung erst nach einem manuellen Neustarten derselben wieder in Betrieb genommen wird.

Um einen Tankstopp von einer sonstigen Fahrunterbrechung unterscheiden zu können, ist erfindungsgemäß vorgesehen, dass das automatische Wiedereinschalten der Standheizung nur dann erfolgt, wenn das Wiedereinschalten der Zündung innerhalb einer vorgegebenen Zeit erfolgt. Diese vorgegebene Zeit ist dabei so bemessen, dass sie in etwa einer tankbedingten Fahrtunterbrechung entspricht. Nach dem Überschreiten dieser vorgegebenen Zeitspanne ist ein automatisches Einschalten nicht mehr möglich, Vielmehr müsste der Fahrtzeugnutzer die Standheizung wieder manuell, beispielsweise durch Betätigen der Taste, in Betrieb nehmen.

Vorteilhafterweise wird über eine Ausgabe- oder Anzeigeeinrichtung angezeigt, ob sich die Standheizung im Betrieb befindet oder ausgeschalten ist. Insbesondere im Falle einer sich nicht wieder automatisch einschaltenden Standheizung wird der Kraftfahrzeugnutzer in diesem Falle davon in Kenntnis gesetzt, dass die Standheizung außer Betrieb ist und von ihm im Bedarfsfall erst wieder manuell in Betrieb genommen werden muss.

Diese Anzeige- bzw. Ausgabeeinrichtung kann beispielsweise als Lautsprecher, der den Kraftfahrzeugnutzer durch Sprachnachrichten in Kenntnis setzt, und/oder als optische Einrichtung, beispielsweise als Display eines Bordcomputers oder als Warnlampe, ausgebildet sein.

In einer sehr vorteilhaften Ausgestaltung setzt die Ausgabeeinrichtung den Kraftfahrzeugnutzer in gleicher Weise davon in Kenntnis, dass nunmehr die Standheizung wieder eingeschaltet werden kann/darf. Zusätzlich oder alternativ kann auch vorgesehen sein, dass die Standheizung nach dem Einschalten der Zündung automatisch wieder eingeschaltet wird.

In einer sehr vorteilhaften Ausgestaltung der Erfindung wird das gesamte erfindungsgemäße Verfahren durch ein Steuergerät, beispielsweise das Steuergerät zur Steuerung der Standheizung, gesteuert. Insbesondere für solche Kraftfahrzeuge, die eine kombinierte Klimaanlage und Standheizung aufweisen, kann hier vorgesehen sein, dass die Funktion dieses Steuergeräts gleichsam durch das Steuergerät der Klimasteuereinrichtung mit erfüllt wird. Denkbar wäre allerdings auch, dass die Funktion des Steuergeräts in dem Steuergerät für die Kraftfahrzeugzündung, dem Steuergerät für die Zugangs- und Fahrberechtigungsanlage und/oder der Motorsteuerung mitimplementiert ist.

Die Erfindung wird nachfolgend anhand der einzigen Figur der Zeichnung näher erläutert. Es zeigt:
- Figur: eine Sicherheitseinrichtung zum Betreiben einer Standheizung, anhand der das erfindungsgemäße Verfahren nachfolgend beschrieben werden soll.

In der Figur ist mit Bezugszeichen 1 eine Sicherheitseinrichtung insbesondere zur Verwendung in einem Kraftfahrzeug bezeichnet. Die Sicherheitseinrichtung 1 weist ein Steuergerät 2, beispielsweise eine Klimasteuereinrichtung einer im Kraftfahrzeug vorgesehenen Klimaanlage, auf. Zur Steuerung der Standheizung 3 ist das Steuergerät 2 über bidirektional betreibbare Steuerleitungen 6 mit der Standheizung 3 verbunden.

Ferner ist in der Figur schematisch eine Zündung 4 sowie zumindest eine Tür 5 dargestellt. Die Zündung 4 dient in bekannter Weise dazu, die Brennkraftmaschine in Betrieb zu nehmen bzw. nach Beendigung einer Fahrt wieder auszuschalten. Die Zündung 4 sowie die Türen 5 sind über bidirektional betreibbare Steuerleitungen 7, 8 mit dem Steuergerät 2 verbunden. Über die Steuerleitungen 7 wird dem Steuergerät 2 signalisiert, ob sich die Zündung 4 im eingeschalteten Zustand befindet oder nicht. Über die Steuerleitung 8 wird dem Steuergerät 2 signalisiert, ob die Türen 5 geschlossen sind oder ob sich zumindest eine der Tür 5 im geöffneten Zustand befindet.

Ferner ist ein Ein/Aus-Schalter 11 vorgesehen, der mit dem Steuergerät 2 gekoppelt ist. Über den Ein-/Aus-Schalter 11, der zum Beispiel als Taste ausgebildet ist, kann dem Steuergerät 2 angezeigt werden, dass die Standheizung 3 in Betrieb genommen bzw. auch wieder ausgeschaltet werden soll. Der Ein/Aus-Schalter 11 kann - beispielsweise im Falle einer im Kraftfahrzeug vorgesehenen Klimaanlage - Bestandteil dieser Klimaanlage sein.

Ferner weist die Sicherheitseinrichtung 1 vorteilhafterweise eine Ausgabeeinrichtung 9, 10 auf, die mit dem Steuergerät 2 gekoppelt ist. Im vorliegenden Ausführungsbeispiel ist sowohl eine optische Ausgabeeinrichtung 9, zum Beispiel ein Display oder eine Warnlampe, wie auch eine akustische Ausgabeeinrichtung 10, zum Beispiel ein Lautsprecher, vorgesehen.

Nachfolgend sei die Funktionsweise der Sicherheitseinrichtung 1 kurz erläutert.

Es sei angenommen, dass die Standheizung 3 beispielsweise nach einem Betätigen des Ein/Aus-Schalters 8 im Betrieb ist. Es sei ferner angenommen, dass die Zündung 4 eingeschaltet ist und sich die Brennkraftmaschine des Kraftfahrzeuges im Betriebszustand befindet. Alle Türen 5 des Kraftfahrzeuges seien in diesem Falle geschlossen. Beabsichtigt nun der Kraftfahrzeugnutzer des Kraftfahrzeuges eine Fahrtunterbrechung zum Zwecke des Betankens desselben, dann wird er nach dem Anhalten an der Tankstelle zunächst die Zündung ausschalten. Dies wird dem Steuergerät 2 über die Steuersignale 7 signalisiert. Anschließend wird der Fahrzeugnutzer aus dem Kraftfahrzeug aussteigen und dabei eine der Türen 5 öffnen. Auch dies wird dem Steuergerät 2 über die Steuersignale 8 signalisiert. Die Steuersignale 7, 8 werden im Steuergerät 2 verarbeitet und ausgewertet. Bei Vorliegen dieser beiden Ausschaltbedingungen interpretiert das Steuergerät 2 dies als Fahrtunterbrechung. Aus Sicherheitsgründen wird das Steuergerät 2 nun die Standheizung 3 über Steuersignale 6 ausschalten. In einer Minimalvariante dieses erfindungsgemäßen Verfahrens würde es aber auch ausreichen, wenn lediglich eine der Ausschaltbedingungen, nämlich entweder das Ausschalten der Zündung 4 oder das Öffnen zumindest einer Tür 5, vorliegt.

Nach Beendigung der Fahrtunterbrechung, beispielsweise nach dem Auftanken des Kraftfahrzeuges, wird der Kraftfahrzeugnutzer wieder die Zündung betätigen. Dies wird dem Steuergerät 2 über Steuersignale 7 signalisiert. Das Steuergerät 2 interpretiert dies dahingehend, dass die Fahrtunterbrechung beendet ist. In Folge dessen schaltet das Steuergerät 2 die Standheizung 3 über die Steuersignale 6 wieder automatisch ein.

Obgleich die vorliegende Erfindung vorstehend anhand eines bevorzugten Ausführungsbeispiels beschrieben wurde, sei sie nicht darauf beschränkt, sondern ist auf mannigfaltige Art und Weise variierbar.

So sei das Steuergerät nicht notwendigerweise Bestandteil einer Klimasteuereinrichtung, sondern kann auch gesondert vorgesehen sein oder Bestandteil des meist ohnehin vorhandenen elektronischen Verriegelungsmechanismus sein. Die Steuerung der Standheizung sowie die Datenkommunikation mit der Zündung, den Türen und der Ausgabeeinrichtungen muss nicht notwendigerweise drahtgebunden erfolgen, sondern kann auch funkgesteuert erfolgen. Unter einer Standheizung sind auch solche Einrichtungen im Kraftfahrzeug zu verstehen, die bei nicht in Betrieb genommenem Motor des Kraftfahrzeuges dennoch Wärme erzeugen, wie dies beispielsweise bei modernen Klimaanlagen der Fall ist.

### Bezugszeichenliste

- 1: Sicherheitseinrichtung
- 2: Steuergerät, Klimasteuereinrichtung
- 3: Standheizung
- 4: (Kraftfahrzeug-)Zündung
- 5: (Kraftfahrzeug-)Tür
- 6: Steuerleitungen, Steuersignal
- 7: Steuerleitungen, Steuersignal
- 8: Steuerleitungen, Steuersignal
- 9: (optische) Ausgabeeinrichtung, Display, Warnlampe
- 10: (akustische) Ausgabeeinrichtung, Lautsprecher
- 11: Ein/Aus-Schalter

## Patentansprüche

1. Verfahren zum Betreiben einer Sicherheitseinrichtung (1) für eine Standheizung (3) in einem oder für ein Kraftfahrzeug, bei dem die Zündung (4) des Kraftfahrzeuges zunächst eingeschaltet ist und bei dem sich die Standheizung (3) zunächst im eingeschalteten Betriebszustand befindet, **dadurch gekennzeichnet, dass** die Standheizung (3) automatisch in einen ausgeschalteten Zustand geschaltet wird, sofern die Zündung (4) des Kraftfahrzeuges ausgeschalten wird und/oder zumindest eine Tür (5) des Kraftfahrzeuges geöffnet wird.

2. Verfahren nach Anspruch 1, **dadurch gekennzeichnet, dass** die Standheizung (3) nach deren automatischem Ausschalten wieder automatisch eingeschaltet wird und in Betrieb genommen wird, sofern die Zündung des Kraftfahrzeuges wieder eingeschaltet wird und/oder die Brennkraftmaschine des Kraftfahrzeuges in Betrieb genommen wird.

3. Verfahren nach Anspruch 2, **dadurch gekennzeichnet, dass** das automatische Wiedereinschalten der Standheizung (3) nur dann erfolgt, wenn das Wiedereinschalten der Zündung (4) innerhalb einer vorgegebenen Zeitspanne erfolgt.

4. Verfahren nach einem der vorstehenden Ansprüche, **dadurch gekennzeichnet, dass** die Standheizung (3) nach deren automatischem Ausschalten erst durch manuelles Einschalten der Standheizung (3) wieder in Betrieb genommen wird.

5. Verfahren nach einem der vorstehenden Ansprüche, **dadurch gekennzeichnet, dass** eine Anzeigevorrichtung (9, 10) vorgesehen ist, die anzeigt, ob die Standheizung (3) sich im eingeschalteten Betriebszustand befindet oder ausgeschaltet ist.

6. Sicherheitseinrichtung (1) zum Betreiben einer Standheizung (3) in einem oder für ein Kraftfahrzeug, insbesondere mittels eines Verfahrens nach einem der vorstehenden Ansprüche, mit einer mit der Standheizung (3) und einem Zündsystem (4) des Kraftfahrzeuges gekoppelten Steuereinrichtung (2) zur Steuerung des Betriebs der Standheizung (3) derart, dass im Falle eines Ausschaltens der Zündung des Zündsystems (4) und/oder eines Öffnens zumindest einer Tür (5) des Kraftfahrzeuges ein Ausschalten der Standheizung (3) erfolgt.

7. Sicherheitseinrichtung nach Anspruch 6, **dadurch gekennzeichnet, dass** eine Ausgabeeinrichtung (9, 10) vorgesehen ist, die dem Kraftfahrzeugnutzer anzeigt, in welchem Betriebszustand sich die Standheizung (3) aktuell gerade befindet.

8. Sicherheitseinrichtung nach Anspruch 7, **dadurch gekennzeichnet, dass** eine optische Ausgabeeinrichtung (9), insbesondere eine Warnlampe oder ein Display (9), und/oder eine akustische Ausgabeeinrichtung (10), insbesondere ein Lautsprecher (10), vorgesehen ist.

9. Sicherheitseinrichtung nach einem der Ansprüche 6 bis 8, **dadurch gekennzeichnet, dass** die Steuereinrichtung (2) zumindest teilweise Bestandteil der Klimasteuerung des Kraftfahrzeuges ist.

## Claims

1. Method of operating a safety device (1) for an auxiliary heating system (3) in or for a motor vehicle, whereby the ignition system (4) of the motor vehicle is initially switched on and whereby the auxiliary heating system (3) is initially in the switched-on operating state, **characterized in that** the auxiliary heating system (3) is automatically switched to a switched-off state if the ignition system (4) of the motor vehicle is switched off and/or at least one door (5) of the motor vehicle is opened.

2. Method according to claim 1, **characterized in that** the auxiliary heating system (3), after being automatically switched off, is automatically switched back on and restarted if the ignition system of the motor vehicle is switched back on and/or the internal combustion engine of the motor vehicle is started.

3. Method according to claim 2, **characterized in that** the auxiliary heating system (3) is automatically switched back on only if the ignition system (4) is switched back on within a preset period of time.

4. Method according to one of the preceding claims, **characterized in that** the auxiliary heating system (3), after being automatically switched off, is restarted only by manual switching-on of the auxiliary heating system (3).

5. Method according to one of the preceding claims, **characterized in that** an indicating device (9, 10) is provided, which indicates whether the auxiliary heating system (3) is in the switched-on operating state or is switched off.

6. Safety device (1) for operating an auxiliary heating system (3) in or for a motor vehicle, in particular by means of a method according to one of the preceding claims, comprising a control device (2), which is connected to the auxiliary heating system (3) and an ignition system (4) of the motor vehicle, for controlling the operation of the auxiliary heating system (3) in such a way that, if the ignition of the ignition system (4) is switched off and/or at least one door (5) of the motor vehicle is opened, the auxiliary heating system (3) is switched off.

7. Safety device according to claim 6, **characterized in that** an output device (9, 10) is provided, which indicates to the motor vehicle user the operating state, in which the auxiliary heating system (3) is actually situated.

8. Safety device according to claim 7, **characterized in that** a visual output device (9), in particular a warning lamp or a display (9), and/or an audible output device (10), in particular a loudspeaker (10), is provided.

9. Safety device according to one of claims 6 to 8, **characterized in that** the control device (2) is at least partially a component part of the air-conditioning control device of the motor vehicle.

## Revendications

1. Procédé pour faire fonctionner un dispositif de sécurité (1) pour un chauffage auxiliaire (3) dans un véhicule automobile ou pour celui-ci, dans lequel l'allumage (4) du véhicule automobile est tout d'abord enclenché et dans lequel le chauffage auxiliaire (3) se trouve tout d'abord dans l'état de service enclenché, **caractérisé en ce que** le chauffage auxiliaire (3) est commuté automatiquement dans un état déconnecté dans la mesure où l'allumage (4) du véhicule automobile est coupé et/ou dans la mesure où au moins une portière (5) du véhicule automobile est ouverte.

2. Procédé selon la revendication 1, **caractérisé en ce que** le chauffage auxiliaire (3) est enclenché automatiquement à nouveau après sa déconnexion et est mis en service dans la mesure où l'allumage du véhicule automobile est à nouveau enclenché et/ou dans la mesure où le moteur à combustion interne du véhicule automobile est mis en service.

3. Procédé selon la revendication 2, **caractérisé en ce que** le ré-enclenchement automatique du chauffage auxiliaire (3) a lieu seulement si le ré-enclenchement de l'allumage (4) a lieu dans un intervalle de temps prescrit.

4. Procédé selon l'une des revendications précédentes, **caractérisé en ce que** le chauffage auxiliaire (3), après sa déconnexion automatique, est remis en service seulement par l'enclenchement manuel du chauffage auxiliaire (3).

5. Procédé selon l'une des revendications précédentes, **caractérisé en ce qu'**un dispositif d'affichage (9, 10) est prévu, lequel indique si le chauffage auxiliaire (3) se trouve dans l'état de service enclenché ou s'il est déconnecté.

6. Dispositif de sécurité (1) pour faire fonctionner un chauffage auxiliaire (3) dans un véhicule automobile ou pour celui-ci, en particulier au moyen d'un procédé selon l'une des revendications précédentes, comprenant un dispositif de commande (2) couplé au chauffage auxiliaire (3) et à un système d'allumage (4) du véhicule automobile pour commander le fonctionnement du chauffage auxiliaire (3) de sorte qu'une déconnexion du chauffage auxiliaire (3) a lieu dans le cas d'une coupure de l'allumage du système d'allumage (4) et/ou dans le cas d'une ouverture d'au moins une portière (5) du véhicule automobile.

7. Dispositif de sécurité selon la revendication 6, **caractérisé en ce qu'**un dispositif de sortie (9, 10) est prévu, lequel indique à l'utilisateur de véhicule automobile dans quel état de service le chauffage auxiliaire (3) se trouve à ce moment précis.

8. Dispositif de sécurité selon la revendication 7, **caractérisé en ce qu'**un dispositif de sortie optique (9), en particulier un témoin d'avertissement ou un afficheur (9), et/ou un dispositif de sortie acoustique (10), en particulier un haut-parleur (10), est/sont prévus.

9. Dispositif de sécurité selon l'une des revendications 6 à 8, **caractérisé en ce que** le dispositif de commande (2) fait au moins partiellement partie intégrante de la commande de climatisation du véhicule automobile.
